# EUROPEAN PATENT APPLICATION

(11) **EP 4 672 293 A1**
(43) Date of publication of application: **31.12.2025**
(21) Application number: 24759486.4
(22) Date of filing: 26.01.2024
(51) Int. Cl.: H01H 71/08, H01H 71/12

(54) **RESIDUAL-CURRENT CIRCUIT BREAKER**

(30) Priority: 24.02.2023 CN 202310199502
(71) Applicant: Zhejiang Chint Electrics Co., Ltd., Wenzhou, Zhejiang 325603 (CN)
(72) Inventor: SI, Yingge, Wenzhou, Zhejiang 325603 (CN); LI, Qiujie, Wenzhou, Zhejiang 325603 (CN); LI, Luobin, Wenzhou, Zhejiang 325603 (CN); YANG, Yu, Wenzhou, Zhejiang 325603 (CN); YANG, Wenyong, Wenzhou, Zhejiang 325603 (CN)
(74) Representative: Berggren Oy
(86) International application number: PCT/CN2024/074224
(87) International publication number: WO 2024/174809

(57) **Abstract**

This application discloses a leakage circuit breaker, which includes: at least one circuit breaker module, a tripping module, and a transformer module. The circuit breaker module and the tripping module are respectively plug-in connected to the transformer module such that these modules are assembled into an integrated leakage circuit breaker, which not only achieves a miniaturization of the assembled leakage circuit breaker but also improves an efficiency of assembly and disassembly of the leakage circuit breaker.

## Description

This application claims priority to Chinese Patent Application No. 202310199502.0 filed with China Patent Office on February 24, 2023. The disclosure of the aforementioned application is incorporated herein by reference in its entirety.

### TECHNICAL FIELD

This application relates to circuit breaker technology, particularly to a leakage circuit breaker.

### BACKGROUND

Since electricity entered people's lives, leakage accidents have occurred from time to time. A leakage circuit breaker is a common protective electrical appliance in low-voltage circuits, which plays an important role in preventing electric shock and leakage.

Applicant found that during a modular assembly process of the existing leakage circuit breaker, due to a large volume of each module, an assembled leakage circuit breaker occupies a lot of installation rail space during actual installation, which in turn reduces the number of leakage circuit breakers installed in the meter box with same volume space.

### SUMMARY

A modular leakage circuit breaker provided by this application is used to solve a technical problem of the leakage circuit breaker occupying too much installation rail space during an installation process.

To achieve this, this application adopts the following technical solution:
a leakage circuit breaker, including:
at least one circuit breaker module, the circuit breaker module includes a first output terminal, and the first output terminal is provided with a first socket;
a tripping module, the tripping module includes a second output terminal, and the second output terminal is provided with a second socket; and
a transformer module, the transformer module includes a first plug and a second plug;
wherein, the circuit breaker module, the tripping module, and the transformer module are assembled into an integrated leakage circuit breaker, the first plug establishes a plug-in connection with the first socket, and the second plug establishes a plug-in connection with the second socket.

In one embodiment, the circuit breaker module includes a first coil, one end of the first coil is connected to the first socket, and the other end is connected to a static contact; and
the tripping module includes a circuit board and a fourth insertor, the circuit board is electrically connected to an insert interface on the transformer module through the fourth insertor to control an electrical circuit on the circuit board.

In one embodiment, the circuit breaker module and the tripping module are detachably connected through a first assembling structure, and the circuit breaker module and the tripping module are respectively detachably connected to the transformer module through a second assembling structure.

In one embodiment, the first assembling structure includes at least one first axle pin;
wherein, the first axle pin sequentially penetrates the circuit breaker module and the tripping module to achieve a detachable connection between the circuit breaker module and the tripping module.

In one embodiment, the second assembling structure includes a cover;
wherein, the circuit breaker module and the tripping module are detachably connected to a first side of the cover, and the transformer module is detachably connected to a second side of the cover, with the first side and the second side being arranged oppositely each other.

In one embodiment, the circuit breaker module and the tripping module are each provided with a first guide groove, the first side of the cover is provided with a first retainer that engages with each first guide groove, and the second side of the cover is provided with a second guide groove, and the transformer module is provided with a second retainer that engages with the second guide groove.

In one embodiment, the cover includes a first cover and a second cover;
wherein, the first cover and the second cover both include the first side and the second side, and the first cover and the second cover are both L-shaped covers and are symmetrically arranged.

In one embodiment, insides of the first cover and the second cover are each provided with a third retainer and a first slot, and the circuit breaker module and the tripping module are each provided with a port that engages with the third retainer, and the transformer module is provided with a fourth retainer that engages with the first slot.

In one embodiment, the first assembling structure further includes at least one second axle pin;
wherein, the second axle pin sequentially penetrates the first cover, the circuit breaker module, the tripping module, and the second cover to achieve a detachable connection between the circuit breaker module, the tripping module, the first cover, and the second cover.

In one embodiment, the circuit breaker module and the tripping module are each provided with a second slot, and the transformer module is provided with fifth retainers that respectively engage with the second slot.

In one embodiment, the first socket and the second socket each include a conductive part and a flexible part;
wherein, the flexible part includes a first end and a second end, the first end of the flexible part is fixedly connected to the conductive part, and the second end of the flexible part forms an opening with the conductive part, and the first plug and the second plug are respectively electrically connected to the conductive part through the flexible part in the opening of the first socket and the conductive part through the flexible part in the opening of the second socket.

In one embodiment, the conductive part is bent to form a groove, the flexible part is at least partially located in the groove, and the second end of the flexible part forms a slot with the conductive part that has the opening.

In one embodiment, the conductive part includes a first vertical part, a first horizontal part, and a second vertical part, and the flexible part includes a third vertical part and an inclined part;
wherein, two ends of the first horizontal part are respectively fixedly connected to the first vertical part and the second vertical part to form a J-shaped conductive part; the inclined part is inclined near the second vertical part and is fixedly connected to the third vertical part to form a V-shaped flexible part.

In one embodiment, the flexible part further includes a bending part; one end of the bending part is bent near the third vertical part, and the other end is fixedly connected to the inclined part, such that the slot guides the transformer module for a quick plug-in connection.

In one embodiment, the third vertical part is fixed to the first vertical part by riveting.

In one embodiment, the circuit breaker module further includes an electromagnetic tripping mechanism;
wherein, a coil of the electromagnetic tripping mechanism is connected to the conductive part of the first socket.

In one embodiment, an extension is provided at one end of the conductive part of the first socket, the extension is fixedly connected to one end of the coil, and the other end of the coil is fixedly connected to a static contact of the electromagnetic tripping mechanism.

In one embodiment, the extension is formed at one end of the conductive part by sheet metal bending.

In one embodiment, the tripping module further includes a main circuit part and a terminal;
wherein, one end of a main circuit wire of the main circuit part is connected to the second socket, and the other end is connected to the terminal.

In one embodiment, the at least one circuit breaker module included in the leakage circuit breaker are three said circuit breaker modules;
wherein, each circuit breaker module is provided with the first socket, the plug includes a first insertor, a second insertor, and a third insertor, and the first insertor, the second insertor, and the third insertor each establish a plug-in electrical connection with the first socket of a corresponding one of the three circuit breaker modules.

### BENEFICIAL EFFECTS

The modular leakage circuit breaker provided by this application reduces the volume of the circuit breaker module and the tripping module by providing sockets at the output terminals of the circuit breaker module and the tripping module, thereby achieving the miniaturization of the assembled leakage circuit breaker. At the same time, by providing corresponding plugs on the transformer module, not only can the circuit breaker module, the tripping module, and the transformer module be quickly assembled, but also be quickly disassembled after a fault, greatly improving the efficiency of assembly and disassembly.

### BRIEF DESCRIPTION OF THE DRAWINGS

Figure 1 is a structural schematic diagram of the leakage circuit breaker provided by an embodiment of this application;
Figure 2 is another structural schematic diagram of the leakage circuit breaker provided by an embodiment of this application;
Figure 3 is a structural schematic diagram of the circuit breaker module provided by an embodiment of this application;
Figure 4 is a cross-sectional view of the circuit breaker module provided by an embodiment of this application;
Figure 5 is a structural schematic diagram of the tripping module provided by an embodiment of this application;
Figure 6 is a cross-sectional view of the tripping module provided by an embodiment of this application;
Figure 7 is a structural schematic diagram of the transformer module provided by an embodiment of this application;
Figure 8 is a structural schematic diagram showing the connection of the conductive part and the flexible part provided by an embodiment of this application;
Figure 9 is a partial structural schematic diagram showing the plug-in connection between the circuit breaker module and the transformer module provided by an embodiment of this application;
Figure 10 is another partial structural schematic diagram showing the plug-in connection between the tripping module and the transformer module provided by an embodiment of this application;
Figure 11 is another partial structural schematic diagram showing the plug-in connection between the tripping module and the transformer module electrically connected provided by an embodiment of this application;
Figure 12 is a structural schematic diagram of the first cover provided by an embodiment of this application;
Figure 13 is a structural schematic diagram of the second cover provided by an embodiment of this application;
Figure 14 is a structural schematic diagram of the circuit breaker module and the tripping module after being assembled as provided by an embodiment of this application;
Figure 15 is a structural schematic diagram of the transformer module assembled with the circuit breaker module and the tripping module respectively, as provided by an embodiment of this application;
Figure 16 is another structural schematic diagram of the transformer module assembled with the circuit breaker module and the tripping module respectively, as provided by an embodiment of this application

### DETAILED DESCRIPTION OF THE EMBODIMENTS

In the description of this application, unless otherwise specified and limited, terms "connect" and "connected" should be broadly understood, for example, they can be fixed connections or detachable connections, mechanical connections or electrical connections, direct connections or indirect connections through intermediate media, internal connections or interactive relationships between two elements. For those skilled in the art, specific meanings of the above terms in this application can be understood according to specific circumstances.

In the description of this application, unless otherwise specified and limited, a first feature "on" or "under" a second feature can include the first feature and the second feature in direct contact, or the first feature and the second feature are not in direct contact but in contact through other features between them. Moreover, the first feature "on," "above," and "on top of" the second feature includes the first feature directly above and diagonally above the second feature, or simply indicates that the horizontal height of the first feature is higher than that of the second feature. The first feature "under," "below," and "underneath" the second feature includes the first feature directly below and diagonally below the second feature, or simply indicates that the horizontal height of the first feature is lower than that of the second feature.

As analyzed in the background of this application, the volume of the leakage circuit breaker in the related technology is relatively large. To solve the above technical problem, this application provides a leakage circuit breaker.

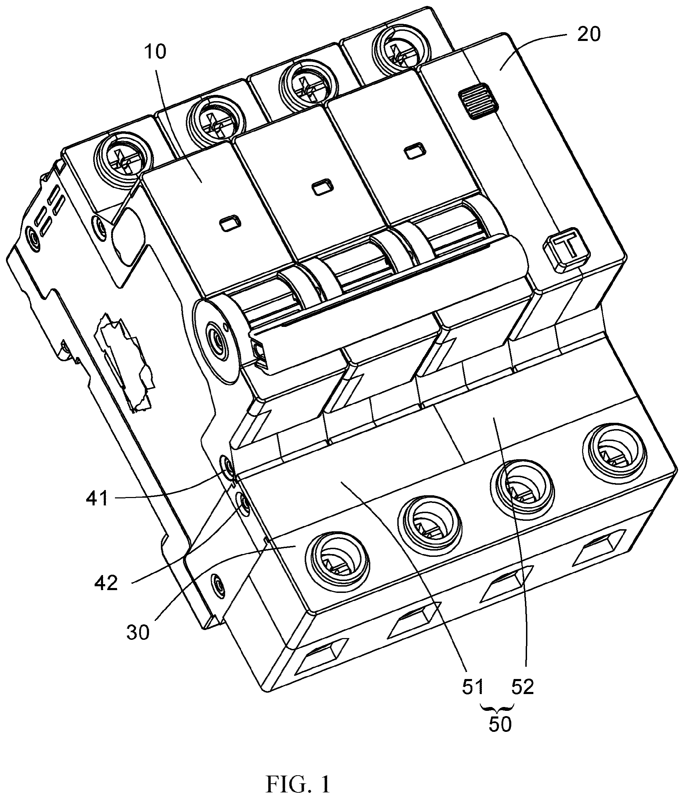

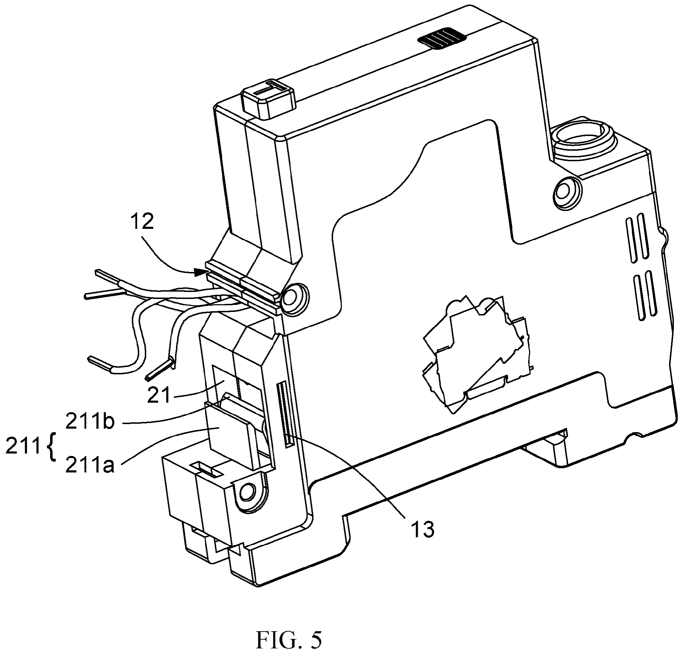

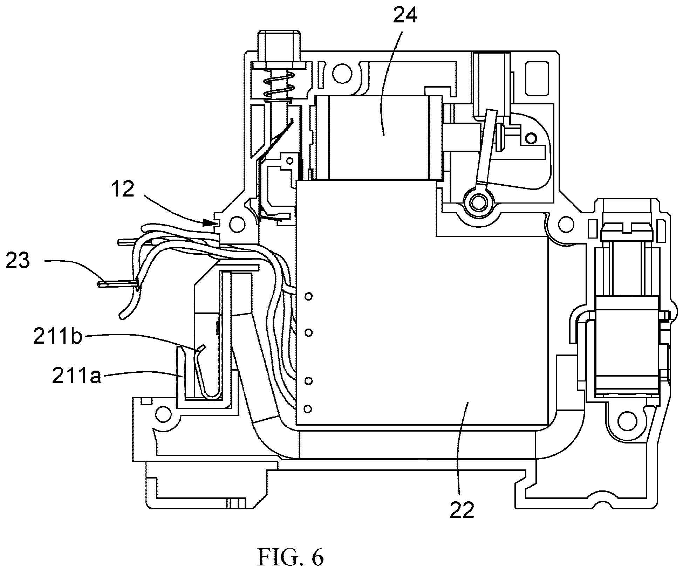

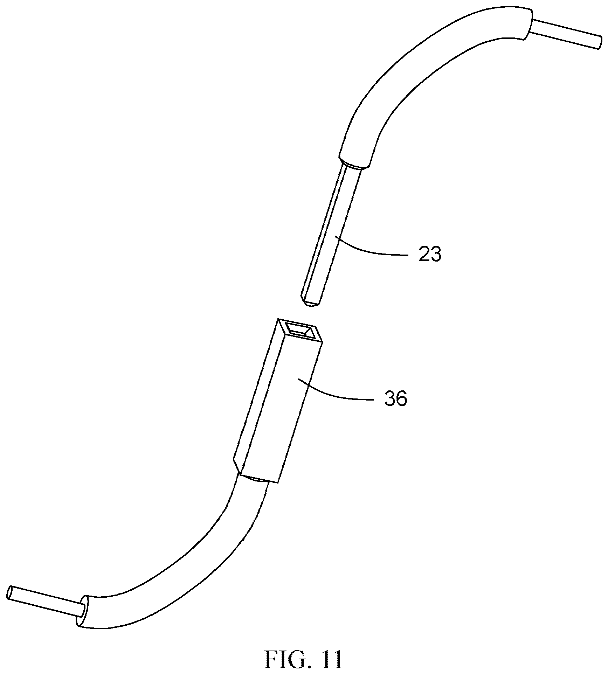

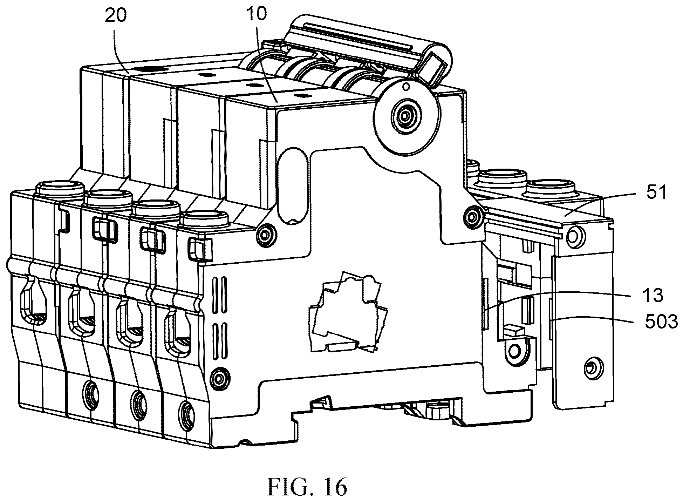

As shown in Figures 1 to 16, a leakage circuit breaker, includes:
at least one circuit breaker module 10, the circuit breaker module 10 includes the first output terminal 11, and the first output terminal 11 is provided with the first socket 111;
the tripping module 20 including the second output terminal 21, and the second output terminal 21 is provided with the second socket 211;
the transformer module 30 including the first plug 34 and the second plug 35;
wherein, the circuit breaker module 10, the tripping module 20, and the transformer module 30 can be assembled into an integrated leakage circuit breaker, the first plug 34 is plug-in connected with the first socket 111, and the second plug 35 is plug-in connected with the second socket 211.

This application reduces the volumes of the circuit breaker module 10 and the tripping module 20 by providing sockets at output terminals of the circuit breaker module 10 and the tripping module 20, thereby achieving miniaturization of the assembled leakage circuit breaker. At the same time, by providing corresponding plugs on the transformer module 30, not only can the circuit breaker module 10, the tripping module 20, and the transformer module 30 be quickly assembled, but also be quickly disassembled after a fault, greatly improving an efficiency of assembly and disassembly.

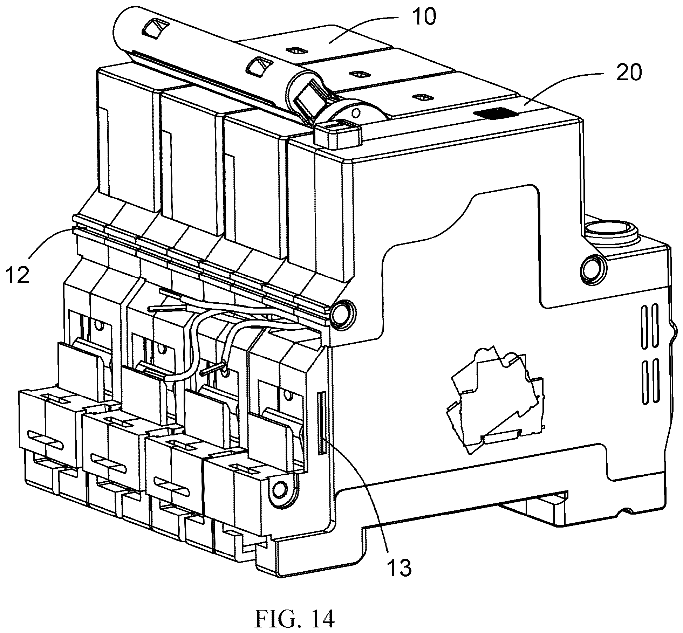

Specifically, a mechanical connection of the circuit breaker module 10, the tripping module 20, and the transformer module 30 during an assembling process can be a detachable connection by using snap-fit and other means. During a process of assembling the circuit breaker module 10, the tripping module 20, and the transformer module 30 into the integrated leakage circuit breaker, the circuit breaker module 10 and the tripping module 20 are assembled in advance to obtain the structure shown in Figure 14. At this time, the first output terminal 11 of the circuit breaker module 10 and the second output terminal 21 of the tripping module 20 are arranged side by side. Then, the transformer module 30 is assembled on the structure shown in Figure 14. During the assembling process, the first plug 34 and the second plug 35 on the transformer module 30 can be directly inserted into the first socket 111 and the second socket 211, respectively, to obtain the assembled integrated leakage circuit breaker.

The leakage circuit breaker provided in this embodiment can include three circuit breaker modules 10, two circuit breaker modules 10, or one circuit breaker module 10. The circuit breaker modules 10 can be of the same model or different models. The number and model(s) of the circuit breaker modules 10 can be selected according to an actual application, and this embodiment does not make a specific limitation.

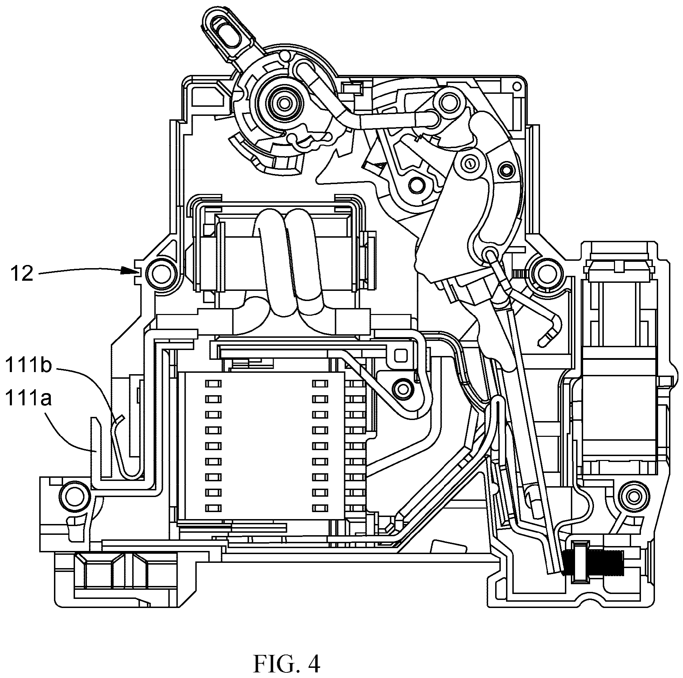

In some embodiments, as shown in Figures 4, 6, and 9, the circuit breaker module 10 includes the first coil 15, one end of the first coil 15 is connected to the first socket 111, and the other end is connected to a static contact. The tripping module 20 includes the second coil 24, the fourth insertor 23, and the circuit board 22. The circuit board 22 is electrically connected to the insert interface 36 on the transformer module 30 through the fourth insertor 23 to achieve a control of the circuit of the circuit board 22.

The circuit breaker module 10 provided in this embodiment can be the universal circuit breaker module 10, the tripping module 20 can be the universal tripping module 20, and the transformer module 30 can be the universal transformer module 30. A selection of the circuit breaker module 10, the tripping module 20, and the transformer module 30 can be made according to the actual application, and this embodiment does not make a specific limitation.

In some embodiments, the circuit breaker module 10 and the tripping module 20 are detachably connected through a first assembling structure, and the circuit breaker module 10 and the tripping module 20 are respectively detachably connected to the transformer module 30 through a second assembling structure to achieve an integration of the circuit breaker module 10, the tripping module 20, and the transformer module 30. Wherein, the first assembling structure and the second assembling structure can be an axle pin assembling structure or a snap-fit assembling structure.

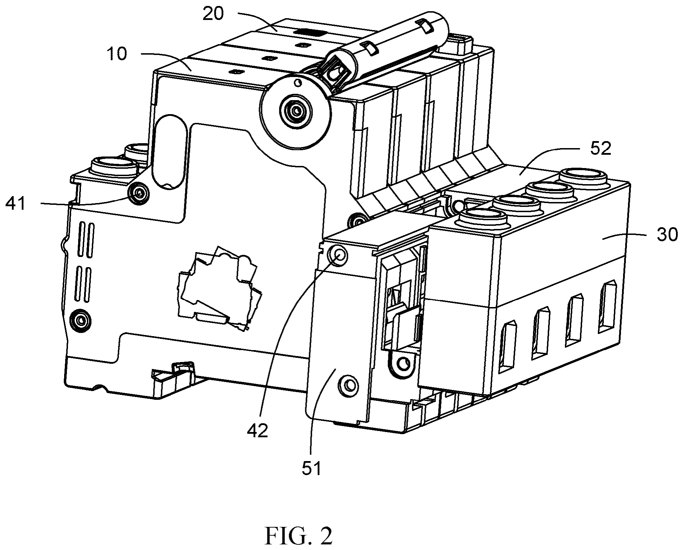

In some specific embodiments, as shown in Figures 1 and 2, the first assembling structure in the leakage circuit breaker includes at least one first axle pin 41. Wherein, the first axle pin 41 penetrates the circuit breaker module 10 and the tripping module 20 to achieve a detachable connection between the circuit breaker module 10 and the tripping module 20. Specifically, by setting through holes in the circuit breaker module 10 and in the tripping module 20, and setting the first axle pin 41 in the through holes, a mechanical connection between the circuit breaker module 10 and the tripping module 20 can be achieved.

In this embodiment, the first axle pin 41 can be a rivet. When assembling the circuit breaker module 10 and the tripping module 20, the first axle pin 41 can directly rivet the circuit breaker module 10 and the tripping module 20 to achieve an integrated structure of the assembled circuit breaker module 10 and tripping module 20.

It should be noted that when the circuit breaker module 10 and the tripping module 20 are assembled using the first assembling structure, the number of first axle pins 41 required can be one or multiple, and the specific number can be selected according to the actual application. This embodiment does not make a specific limitation.

In the embodiment shown in Figures 1 and 2, the first assembling structure can include three first axle pins 41, which means that the circuit breaker module 10 and the tripping module 20 are assembled using three first axle pins 41 to achieve a stable mechanical fixation.

In some specific embodiments, as shown in Figures 1 to 6, the second assembling structure includes the cover 50. Wherein, the circuit breaker module 10 and the tripping module 20 are detachably connected to a first side of the cover 50, and the transformer module 30 is detachably connected to a second side of the cover 50, with the first side and the second side being oppositely arranged.

Specifically, the circuit breaker module 10 and the tripping module 20 can be detachably connected to the first side of the cover 50 in a snap-fit manner. Similarly, the transformer module 30 can be detachably connected to the second side of the cover 50 in a snap-fit manner. That is, snap-fit structures can be set respectively between the circuit breaker module 10, the tripping module 20, and the transformer module 30 and the cover 50 to achieve the assembling of the circuit breaker module 10, the tripping module 20, and the transformer module 30 into the integrated leakage circuit breaker.

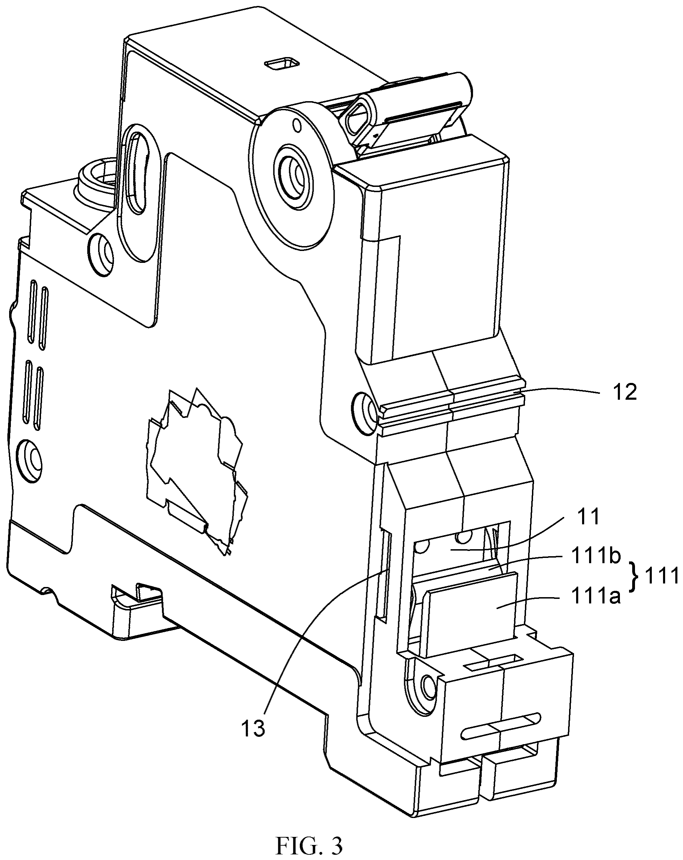

In some specific embodiments, as shown in Figures 3, 4, 5, 6, 12, 13, and 14, the circuit breaker module 10 and the tripping module 20 are both provided with the first guide groove 12. The first side of the cover 50 is provided with the first retainer 501 that engages with the first guide groove 12, and the second side of the cover 50 is provided with the second guide groove 502, and the transformer module 30 is provided with the second retainer 31 that engages with the second guide groove 502.

Wherein, after the circuit breaker module 10, the tripping module 20, and the transformer module 30 are assembled into the integrated leakage circuit breaker, the cover 50 is assembled on the leakage circuit breaker to further strengthen the mechanical connection between the modules. At the same time, the cover 50 can also enclose plug-in areas between the transformer module 30 and the circuit breaker module 10 and the tripping module 20 to improve the safety performance of the leakage circuit breaker.

In some specific embodiments, as shown in Figures 1, 2, 12, and 13, the cover 50 includes the first cover 51 and the second cover 52. Wherein, the first cover 51 and the second cover 52 both include the first side and the second side, and the first cover 51 and the second cover 52 are both L-shaped covers 50 and are symmetrically arranged.

Specifically, to facilitate the assembly of the cover 50 on the leakage circuit breaker module 10, this embodiment uses the first cover 51 and the second cover 52, both of which are L-shaped, to achieve complete enclosure of the plug-in areas between the transformer module 30 and the circuit breaker module 10 and the tripping module 20. The sizes of the first cover 51 and the second cover 52 can be the same or different, as long as they can achieve complete enclosure of the plug-in areas between the transformer module 30 and the circuit breaker module 10 and the tripping module 20.

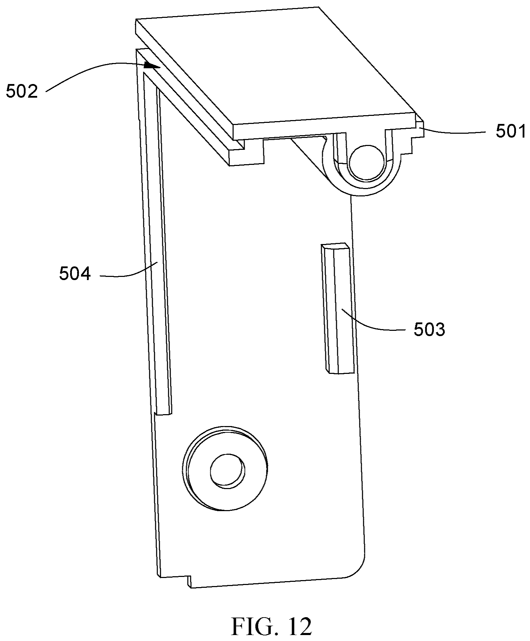

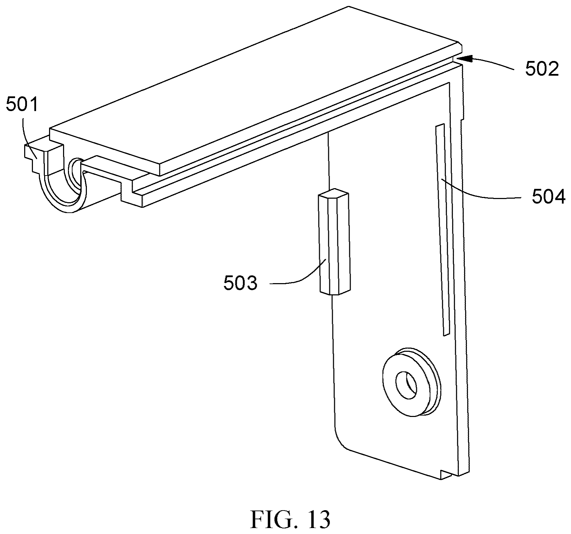

In some specific embodiments, as shown in Figures 12 and 13, the inside of the first cover 51 and the second cover 52 are each provided with the third retainer 503 and the first slot 504, and the circuit breaker module 10 and the tripping module 20 are each provided with the port 13 that engages with the third retainer 503, and the transformer module 30 is provided with the fourth retainer 32 that engages with the first slot 504. Specifically, when the first cover 51 and the second cover 52 are to be assembled on the leakage circuit breaker module 10, one only needs to snap the third retainer 503 into the port 13 and snap the fourth retainer 32 into the first slot 504 to achieve the assembly of the first cover 51 and the second cover 52 on the leakage circuit breaker module 10.

In some specific embodiments, as shown in Figures 1 and 2, the first assembling structure also includes at least one second axle pin 42; wherein, the second axle pin 42 sequentially penetrates the first cover 51, the circuit breaker module 10, the tripping module 20, and the second cover 52 to achieve a detachable connection between the circuit breaker module 10, the tripping module 20, the first cover 51, and the second cover 52.

Specifically, the second axle pin 42 provided in this embodiment can be a rivet. To further improve the stability of the integrated leakage circuit breaker, after the third retainer 503 is snapped into the snap-fit and the fourth retainer 32 is snapped into the first slot 504, the second axle pin 42 sequentially penetrates the first cover 51, the circuit breaker module 10, the tripping module 20, and the second cover 52 to achieve riveting, thereby completing the assembly of the integrated leakage circuit breaker.

It should be noted that when the modules of the leakage circuit breaker are assembled using the first assembling structure, the number of second axle pins 42 required can be one or multiple, and the specific number can be selected according to the actual application. This embodiment does not make a specific limitation.

In the embodiment shown in Figures 1 and 2, the first assembling structure can also include two second axle pins 42, which means that the modules of the leakage circuit breaker are assembled using two second axle pins 42 to complete the assembly of the integrated leakage circuit breaker.

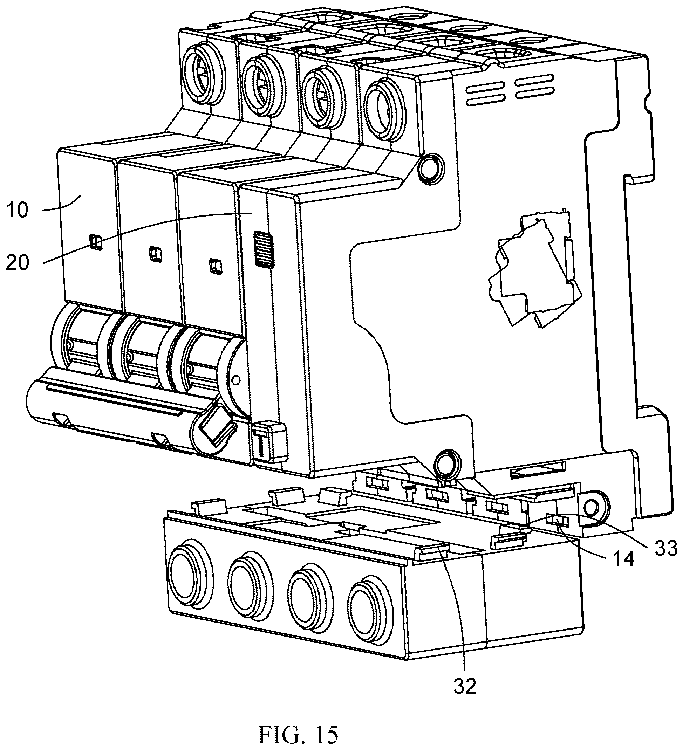

In some embodiments, as shown in Figure 15, the circuit breaker module 10 and the tripping module 20 are each provided with the second slot 14, and the transformer module 30 is provided with the fifth retainers 33 that engage with the second slots 14. Specifically, when the circuit breaker module 10 and the tripping module 20 are mechanically assembled with the transformer module 30, by snapping the fifth retainers 33 on the transformer module 30 into the circuit breaker module 10 and the tripping module 20, the transformer module 30 can be mechanically connected to the circuit breaker module 10 and the tripping module 20, respectively.

In some embodiments, as shown in Figures 3, 4, 5, 6, 7, 9, and 10, the first socket 111 and the second socket 211 both include a conductive part and a flexible part. Wherein, the flexible part includes a first end and a second end, the first end of the flexible part is fixedly connected to the conductive part, and the second end of the flexible part forms an opening with the conductive part, and the first plug 34 and the second plug 35 are both electrically connected to the conductive part through the flexible part in the opening.

Specifically, the first socket 111 includes the first conductive part 111a and the first flexible part 111b, and the second socket 211 includes the second conductive part 211a and the second flexible part 211b. After the first conductive part 111a is fixedly connected to the first flexible part 111b and the second conductive part 211a is fixedly connected to the second flexible part 211b, one end of the first conductive part 111a and one end of the second conductive part 211a are each bent to form a groove, and the first flexible part 111b and the second flexible part 211b are each bent, with at least part of the flexible part located in the groove, and the second ends of the first flexible part 111b and the second flexible part 211b each form a slot with the conductive part and the slot has an opening. After the first plug 34 and the second plug 35 are inserted into the corresponding slots through the corresponding openings, the first flexible part 111b and the second flexible part 211b apply pressure to the first plug 34 and the second plug 35, respectively, to achieve contact between the first plug 34 and the first conductive part 111a and between the second plug 35 and the second conductive part 211a, thereby achieving electrical connection.

It should be noted that the flexible part can be bent in existing ways to form a slot with an opening in the groove of the conductive part. That is, the bending methods of the conductive part and the flexible part can be selected according to the actual application, and this embodiment does not make a specific limitation.

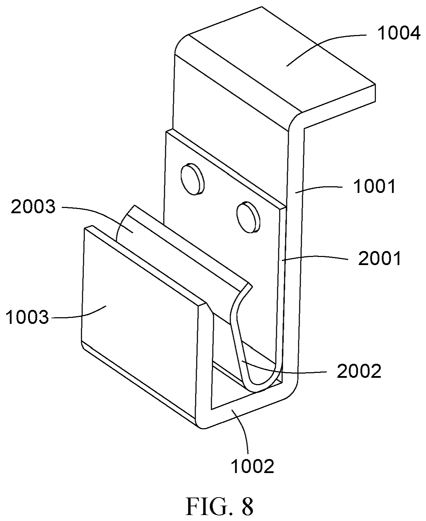

In some embodiments, as shown in Figures 8, 9, and 10, each conductive part includes the first vertical part 1001, the first horizontal part 1002, and the second vertical part 1003, and each flexible part includes the third vertical part 2001 and the inclined part 2002. Wherein, the ends of the first horizontal part 1002 are respectively fixedly connected to the first vertical part 1001 and the second vertical part 1003 to form a J-shaped conductive part. The inclined part 2002 is inclined near the second vertical part 1003 and is fixedly connected to the third vertical part 2001 to form a V-shaped flexible part. That is, the first conductive part 111a and the second conductive part 211a in this application can be set as J-shaped conductive parts. At the same time, the third vertical part 2001 is fixedly connected to the inclined part 2002, and the inclined part 2002 is inclined away from the third vertical part 2001, which allows the flexible part to be formed as a V-shaped flexible part. That is, the first flexible part 111b and the second flexible part 211b in this application can be set as V-shaped flexible parts.

Wherein, the first conductive part 111a and the second conductive part 211a can be metal conductive sheets, but not limited thereto. The first flexible part 111b and the second flexible part 211b can be pressure spring plates, and similarly, the first flexible part 111b and the second flexible part 211b are not limited thereto.

In some embodiments, as shown in Figure 8, the first end of each flexible part can be riveted to the corresponding conductive part, that is, the third vertical part 2001 can be fixed to the first vertical part 1001 by riveting, and the top of the second end of the flexible part is inclined towards the first end of the flexible part, thereby quickly achieving plug-in connections between the circuit breaker module 10 and the tripping module 20 with the transformer module 30. That is, the inclined part 2002 is inclined away from the third vertical part 2001, and after one end of the inclined part 2002 is fixedly connected to the third vertical part 2001, the bending part 2003 can also be provided at the other end of the inclined part 2002, and the bending part 2003 is bent towards the third vertical part 2001, thereby quickly achieving plug-in connections between the circuit breaker module 10 and the tripping module 20 with the transformer module 30.

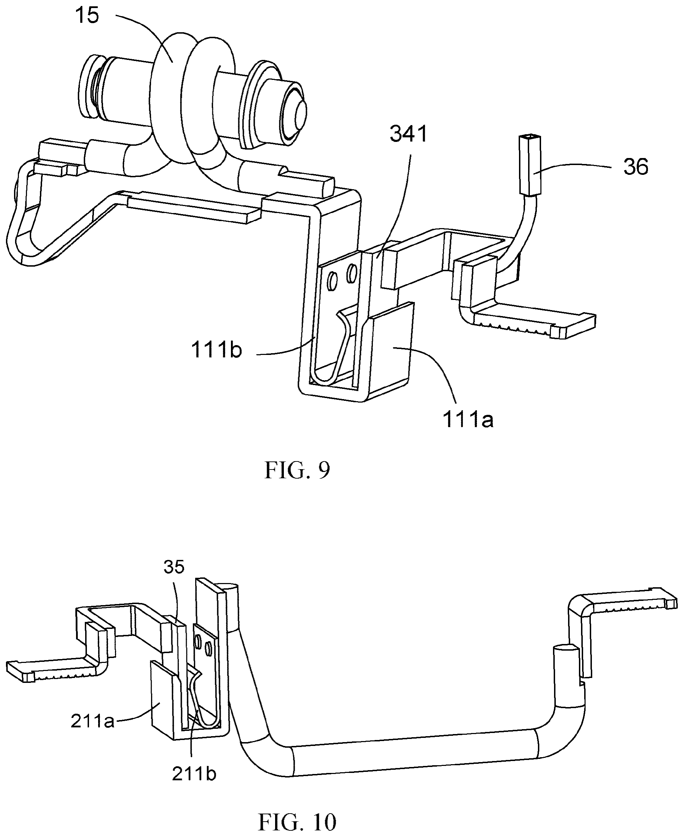

Specifically, as shown in Figures 9 and 10, the first end of the first flexible part 111b is riveted to the first conductive part 111a, and the second end of the first flexible part 111b is bent to be close to the first end of the first flexible part 111b. The first end of the second flexible part 211b is riveted to the second conductive part 211a, and the second end of the second flexible part 211b is bent to be close to the first end of the second flexible part 211b.

At the same time, between the first conductive part 111a and the second end of the first flexible part 111b, and between the second conductive part 211a and the second end of the second flexible part 211b, there are respectively formed ends of the slots with openings, that is, the ends of the slots close to their respective conductive parts, the top of each end is inclined away from the second end of the flexible part, which has a guiding effect, thereby quickly achieving plug-in connections between the circuit breaker module 10 and the tripping module 20 with the transformer module 30.

In some embodiments, the first end of each flexible part can be riveted to the corresponding conductive part by multiple rivets to achieve an integrated structure between the conductive part and the flexible part.

Specifically, as shown in Figures 9 and 10, the first end of the first flexible part 111b can be riveted to the first conductive part 111a by two rivets, and the first end of the second flexible part 211b can also be riveted to the second conductive part 211a by two rivets.

It should be noted that when the conductive part and the flexible part form an integrated structure, they can also be fixed by screws or by other methods in existing technology, which can be selected according to the actual application, and this embodiment does not make a specific limitation.

In some embodiments, as shown in Figures 8 and 9, the circuit breaker module 10 also includes an electromagnetic tripping mechanism, which includes a coil and a static contact, and the extension 1004 is provided at one end of the first conductive part 111a, with one end of the coil being fixedly connected to the extension 1004 and the other end fixedly connected to the static contact. Specifically, one end of the coil can be directly placed on the extension 1004 and fixedly electrically connected to the first conductive part 111a through the extension 1004.

Wherein, during a manufacturing process of the first conductive part 111a, one end of the first conductive part 111a, which is electrically connected to the coil, can be bent in a sheet metal fabrication to form a stepped shape to form the extension 1004 for electrical connection with the coil, and the other end of the first conductive part 111a can also be bent in a sheet metal fabrication to make the first conductive part 111a bend to form a groove, thereby forming an opening slot with the second end of the first flexible part 111b, so that the transformer module 30 can establish a plug-in electrically connection with the circuit breaker module 10 in the slot.

In some embodiments, as shown in Figure 10, the tripping module also includes a main circuit part and a terminal, wherein the main circuit part includes a main circuit wire, and the terminal is provided with a contact piece, wherein one end of the main circuit wire is fixedly electrically connected to the second conductive part 211a, and the other end is fixedly electrically connected to the contact piece.

Wherein, during the manufacturing process of the second conductive part 211a, the same manufacturing method as the first conductive part 111a can be used, or other manufacturing methods can be used, and the results between the first conductive part 111a and the second conductive part 211a can be the same or different, which can be selected according to the actual application, and this embodiment does not make a specific limitation.

In some embodiments, as shown in Figures 1, 2, and 7, the leakage circuit breaker includes three circuit breaker modules 10, and each circuit breaker module 10 is provided with the first socket 111, and three first plugs 34 include respectively the first insertor 341, the second insertor 342, and the third insertor 343, which respectively establish plug-in electrical connection with the first sockets 111 of the three circuit breaker modules 10 in one-to-one correspondence.

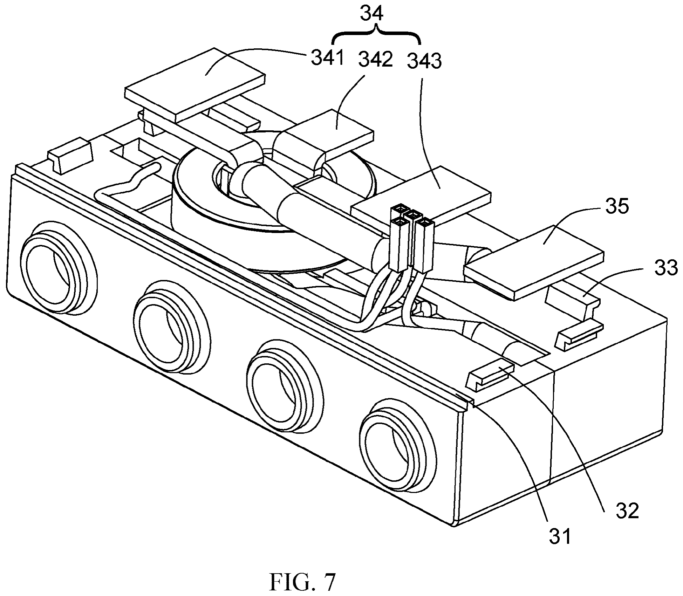

Specifically, in the embodiment shown in Figure 7, the transformer module also includes a transformer and a spacing arc piece, the transformer has a wire hole, the first insertor 341, the second insertor 342, and the third insertor 343 all pass through the wire hole and extend to the terminal of the transformer module, and the spacing arc piece is set in the wire hole and is used to separate the first insertor 341, the second insertor 342, and the third insertor 343.

It should be noted that the first insertor 341, the second insertor 342, and the third insertor 343 can all be formed integrally by using three conductive sheets with the same or different bending methods, which can be selected according to the actual application, and this embodiment does not make a specific limitation.

## Claims

1. A leakage circuit breaker, comprising:
at least one circuit breaker module (10), the circuit breaker module (10) comprises a first output terminal (11), and the first output terminal (11) is provided with a first socket (111);
a tripping module (20), the tripping module (20) comprises a second output terminal (21), and the second output terminal (21) is provided with a second socket (211); and
a transformer module (30), the transformer module (30) comprises a first plug (34) and a second plug (35);
wherein, the circuit breaker module (10), the tripping module (20), and the transformer module (30) are assembled into an integrated leakage circuit breaker, the first plug (34) establishes a plug-in connection with the first socket (111), and the second plug (35) establishes a plug-in connection with the second socket (211).

2. The leakage circuit breaker according to claim 1, wherein, the circuit breaker module (10) comprises a first coil (15), one end of the first coil (15) is connected to the first socket (111), and the other end is connected to a static contact; and
the tripping module (20) comprises a circuit board (22) and a fourth insertor (23), the circuit board (22) is electrically connected to an insert interface (36) on the transformer module (30) through the fourth insertor (23) to control an electrical circuit on the circuit board (22).

3. The leak circuit breaker according to claim 1, wherein, the circuit breaker module (10) and the tripping module (20) are detachably connected through a first assembling structure, and the circuit breaker module (10) and the tripping module (20) are respectively detachably connected to the transformer module (30) through a second assembling structure.

4. The leakage circuit breaker according to claim 3, wherein, the first assembling structure comprises at least one first axle pin (41); wherein, the first axle pin (41) penetrates the circuit breaker module (10) and the tripping module (20).

5. The leak circuit breaker according to claim 3, wherein, the second assembling structure comprises a cover (50); and
wherein, the circuit breaker module (10) and the tripping module (20) are detachably connected to a first side of the cover (50), and the transformer module (30) is detachably connected to a second side of the cover (50), the first side and the second side being arranged opposite each other.

6. The leakage circuit breaker according to claim 5, wherein, the circuit breaker module (10) and the tripping module (20) are each provided with a first guide groove (12), the first side of the cover (50) is provided with a first retainer (501) that engages with each first guide groove (12), and the second side of the cover (50) is provided with a second guide groove (502), and the transformer module (30) is provided with a second retainer (31) that engages with the second guide groove (502).

7. The leakage circuit breaker according to claim 5, wherein, the cover (50) comprises a first cover (51) and a second cover (52); and
wherein, the first cover (51) and the second cover (52) both comprise the first side and the second side, and the first cover (51) and the second cover (52) are both L-shaped covers and are symmetrically arranged.

8. The leakage circuit breaker according to claim 7, wherein, insides of the first cover (51) and the second cover (52) are each provided with a third retainer (503) and a first slot (504), and the circuit breaker module (10) and the tripping module (20) are each provided with a port (13) that engages with the third retainer (503), and the transformer module (30) is provided with a fourth retainer (32) that engages with the first slot (504).

9. The leakage circuit breaker according to claim 7, wherein, the first assembling structure further comprises at least one second axle pin (42); wherein, the second axle pin (42) sequentially penetrates the first cover (51) and the second cover (52).

10. The leakage circuit breaker according to claim 1, **characterized in that**, the circuit breaker module (10) and the tripping module (20) are each provided with a second slot (14), and the transformer module (30) is provided with fifth retainers (33) that respectively engage with the second slot (14).

11. The leakage circuit breaker according to claim 1, wherein, the first socket (111) and the second socket (211) each comprise a conductive part and a flexible part; and
wherein, the flexible part comprises a first end and a second end, the first end of the flexible part is fixedly connected to the conductive part, and the second end of the flexible part forms an opening with the conductive part, and the first plug (34) and the second plug (35) are respectively electrically connected to the conductive part through the flexible part in the opening of the first socket (111) and the conductive part through the flexible part in the opening of the second socket (211).

12. The leak circuit breaker according to claim 11, wherein, the conductive part is bent to form a groove, the flexible part is at least partially located in the groove, and the second end of the flexible part forms a slot with the conductive part that has the opening.

13. The leakage circuit breaker according to claim 12, wherein, the conductive part comprises a first vertical part (1001), a first horizontal part (1002), and a second vertical part (1003), and the flexible part comprises a third vertical part (2001) and an inclined part (2002); and
wherein, two ends of the first horizontal part (1002) are respectively fixedly connected to the first vertical part (1001) and the second vertical part (1003) to form a J-shaped conductive part; the inclined part (2002) is inclined near the second vertical part (1003) and is fixedly connected to the third vertical part (2001) to form a V-shaped flexible part.

14. The leakage circuit breaker according to claim 13, wherein, the flexible part further comprises a bending part (2003); one end of the bending part (2003) is bent near the third vertical part (2001), and the other end is fixedly connected to the inclined part (2002), such that the slot guides the transformer module (30) for a quick plug-in connection.

15. The leak circuit breaker according to claim 13, wherein, the third vertical part (2001) is fixed to the first vertical part (1001) by riveting.

16. The leakage circuit breaker according to claim 11, wherein, the circuit breaker module (10) further comprises an electromagnetic tripping mechanism; and
wherein, a coil of the electromagnetic tripping mechanism is connected to the conductive part of the first socket (111).

17. The leakage circuit breaker according to claim 16, wherein, an extension (1004) is provided at one end of the conductive part of the first socket (111), the extension (1004) is fixedly connected to one end of the coil, and the other end of the coil is fixedly connected to a static contact of the electromagnetic tripping mechanism.

18. The leak circuit breaker according to claim 17, wherein, the extension (1004) is formed at one end of the conductive part by sheet metal bending.

19. The leakage circuit breaker according to claim 11, wherein, the tripping module (20) further comprises a main circuit part and a terminal; and
wherein, one end of a main circuit wire of the main circuit part is connected to the second socket (211), and the other end is connected to the terminal.

20. The leakage circuit breaker according to any one of claims 1-19, wherein, the at least one circuit breaker module (10) comprised in the leakage circuit breaker are three said circuit breaker modules (10); and
wherein, each circuit breaker module (10) is provided with the first socket (111), the first plug (34) comprises a first insertor (341), a second insertor (342), and a third insertor (343), and the first insertor (341), the second insertor (342), and the third insertor (343) each establish a plug-in electrical connection with the first socket (111) of a corresponding one of the three circuit breaker modules (10).
